# EUROPEAN PATENT APPLICATION

(11) **EP 4 553 106 A1**
(43) Date of publication of application: **14.05.2025**
(21) Application number: 24208855.7
(22) Date of filing: 25.10.2024
(51) Int. Cl.: C08J 5/18, C08L 29/14, C08L 77/00, C08K 5/00

(54) **FILM**

(30) Priority: 07.11.2023 KR 20230152626
(71) Applicant: SK microworks Co., Ltd., Suwon-si, Gyeonggi-do 16336 (KR)
(72) Inventor: CHUNG, Sungjin, 16336 Suwon-si, Gyeonggi-do (KR); JANG, Kwangho, 16336 Suwon-si, Gyeonggi-do (KR); HAN, Kweon Hyung, 16336 Suwon-si, Gyeonggi-do (KR)
(74) Representative: BCKIP Part mbB

(57) **Abstract**

An embodiment is a film comprising a first polymeric resin; and a second polymeric resin, which are heterogeneous resins, wherein the first polymeric resin includes polyamide-based repeating units and polyether-based repeating units, and the second polymeric resin includes any one selected from the group consisting of hydroxyl groups, acetyl groups, and combinations thereof within its branch, and wherein the haze value of the film is 3% or less after being left at 60°C for 7 days. The film of the embodiment can have better optical properties because the change of haze is suppressed even when exposed to a high temperature or ultraviolet environment for a long time and has excellent utilization as a surface protection film.

## Description

This application claims the priority of Patent Application No.10-2023-0152626, filed November 07, 2023 at Republic of Korea.

### BACKGROUND

### 1. Field

Embodiments are directed to films that exhibit excellent mechanical strength and optical properties.

### 2. Description of Related Art

Films containing polyester have a wide range of applications due to their excellent dimensional stability, thickness uniformity, and optical transparency. They are widely utilized as materials in various industrial fields. Specifically, polyester films are preferred when optical clarity is essential, while polyamide films are chosen for applications demanding durability and heat resistance.

Conversely, films made from polyurethane are also used as surface protection films. These films are designed to shield surfaces from external impacts. For instance, an automotive surface protection film is commonly referred to as a paint protection film (PPF). Surface protection films are applied to the exterior of various products and are often required to be impact-resistant, UV-resistant, and heat-resistant. Additionally, they must offer excellent workability when applied to surfaces such as automobiles, airplanes, electronics, and furniture.

The foregoing background description is technical information that the inventor had in his/her possession or learned in the course of deriving embodiments of the present invention and does not necessarily constitute prior art available to the general public prior to the filing of this application.

With relevant prior arts, there are
"COATING COMPOSITION FOR INTERIOR PANEL OF AUTOMOBILE " disclosed in Korean Patent Publication No. 10-2011-0082893 and
"URETHANE-BASED FILM FOR PAINT PROTECTION FILM AND PAINT PROTECTION FILM COMPRISING THE SAME" disclosed in Korean Patent Publication No. 10-2021-0013842.

### SUMMARY

An objective of the embodiments is to provide a film that exhibits excellent optical and mechanical properties.

To accomplish the above objectives, a film according to one or more embodiments, includes a first polymeric resin; and a second polymeric resin, which are heterogeneous resins.

The first polymeric resin includes polyamide-based repeating units and polyether-based repeating units.

The second polymeric resin includes any one selected from the group consisting of hydroxyl groups, acetyl groups, and combinations thereof within its branches.

After being exposed to 60°C for 7 days, a haze value of the film may be 3% or less.

The difference between the haze value before and after being exposed to 60°C for 7 days may be 1% or less.

The polyether-based repeating unit may include any one of tetramethylene oxide residues, ethylene oxide residues, and propylene oxide residues.

The film may include at least 20 wt% of the polyether-based repeating units based on the total weight of the first polymeric resin.

The film may include 2.5 parts per weight or less of the second polymeric resin based on 1 parts per weight of the first polymeric resin.

The film may further include a plasticizer.

The plasticizers may be any one selected from triethylene glycol bis 2-ethylhexanoate (3G8), tetraethylene glycol diheptanoate (4G7), triethylene glycol bis 2-ethylbutyrate (3GH), triethylene glycol bis 2-heptanoate (3G7), dibutoxyethoxyethyl adipate (DBEA), butyl carbitol adipate (DBEEA), dibutyl sebacate (DBS), bis 2- hexyl adipate (DHA), triethylene glycol di- 2-ethyl butylate, triethylene glycol di- 2-ethylhexanoate, triethylene glycol di-nheptanoate, and triethylene glycol di-n-heptanoate.

The film may include 0.5 parts per weight or less of the plasticizer based on 1 parts per weight of the second polymeric resin.

The film may include at least 2 wt% of hydroxyl groups of the second polymeric resin, based on the total weight of the second polymeric resin.

The film may have a haze value of 3% or less at room temperature.

To accomplish the above objectives, the film according to one or more embodiments may be a surface protective film.

### BRIEF DESCRIPTION OF THE DRAWINGS

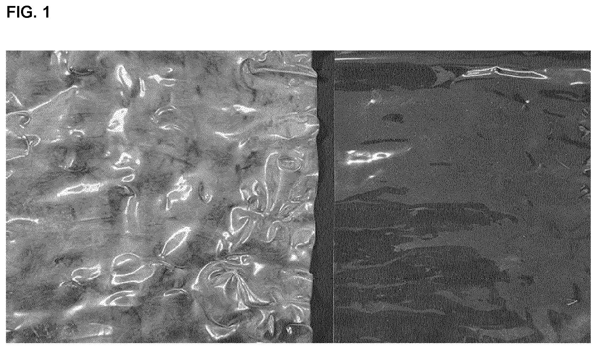

FIG. 1 shows a comparative view of a film of Comparative Example 1 (with strong haze, left) and a film of Example 3 (with low haze, right) in natural light.

### DETAILED DESCRIPTION

The embodiments are described in detail below to facilitate understanding and implementation by those skilled in the art to which the embodiments belong. However, embodiments may be implemented in many different forms and are not limited to the embodiments described herein. Throughout the specification, parts like are designated by drawing designations.

In the specification, when a configuration is the to "comprise" another configuration, it is meant to be inclusive of the other configuration, not exclusive of the other configuration, unless specifically stated to the contrary.

In the specification, when a configuration is the to be "connected" to another configuration, it is not limited to being "directly connected", but also comprises being "connected with another configuration in between".

In the specification, the reference to B being positioned on A means B being positioned on A with B directly abutting A or in any other configuration therebetween, and shall not be construed to be limited to B being positioned abutting the surface of A.

In the specification, the term "combination thereof," as used in a Makushi-style representation, refers to one or more mixtures or combinations selected from the group of components described in the Makushi-style representation, which may comprise one or more components selected from the group.

In the specification, references to "A and/or B" shall mean "A, B, or A and B".

In this specification, terms such as "first", "second" or "A", "B" are used to distinguish one from the other, unless otherwise indicated.

In this specification, singular expressions shall, unless otherwise indicated, be construed to include the singular or plural as construed from the context.

In this specification, ambient temperature is assumed to be about 20°C and room temperature is assumed to be about 25°C.

In this specification, letters and/or numbers in combination with the name of a compound mean an abbreviation for the name of the compound.

To accomplish the above objectives, a film according to an embodiment comprises a first polymeric resin and a second polymeric resin.

The first polymeric resin comprises polyamide-based repeating units and polyether-based repeating units.

The second polymeric resin comprises any one selected from the group consisting of hydroxyl groups, acetal groups, and combinations thereof within its branches.

The first polymer resin, which comprises polyamide-based repeating units and polyether-based repeating units, may have excellent features such as durability and dimensional stability.

When a first polymer resin containing polyamide repeating units and polyether repeating units is applied in the form of a film, an increase in haze is sometimes observed after prolonged exposure to air at high temperatures. Through repeated testing, the inventors determined that this phenomenon is caused by migration of unreacted polyether monomers (or oligomers) within the film.

To mitigate this haze variation, the inventors employed various methods and discovered that the haze variation can be significantly reduced by, for example, blending and forming a film from a heterogeneous resin that includes a second polymeric resin along with the first polymeric resin, as described in the embodiments.

Below, we describe an example implementation in more detail.

### First Polymer Resins

The first polymeric resin comprises polyamide-based repeating units and polyether-based repeating units.

The first polymeric resin may further comprise polyamide-based repeating units. The polyamide-based repeating units may enhance the hardness of the film. The polyether-based repeating units may work in conjunction with the polyamide-based repeating units to provide the film with properties such as flexibility and the ability to maintain its flexibility and elasticity across a relatively wide temperature range.

The first polymeric resin may comprise 80 wt% or less of the polyamide-based repeating units. The first polymeric resin may comprise 70 wt% or less of the polyamide-based repeating units. The first polymeric resin may comprise 60 wt% or less of the polyamide-based repeating units. The first polymeric resin may comprise 50 wt% or less of the polyamide-based repeating units. The first polymeric resin may comprise 40 wt% or less of the polyamide-based repeating units. The first polymeric resin may comprise 30 wt% or less of the polyamide-based repeating units. The first polymer resin may include the polyamide-based repeating unit in an amount of 0 wt% or more, or 10 wt% or more.

The polyamide-based repeating units may comprise polyamide residues.

The first polymeric resin may comprise 80 wt% or less, 70 wt% or less, 60 wt% or less, 50 wt% or less, 40 wt% or less, or 30 wt% or less of polyamide residues. The first polymeric resin may also contain 0 wt% or more, or 10 wt% or more.

The polyamide residues may be, for example, aliphatic polyamide residues, semi-aromatic polyamide residues, semi-crystalline polyamide residues, amorphous polyamide residues, or mixtures thereof.

The first polymeric resin may comprise 80 wt% or less, 70 wt% or less, 60 wt% or less, 50 wt% or less, 40 wt% or less, or 30 wt% or less of the sum of aliphatic polyamide residues, semi-aromatic polyamide residues, semi-crystalline polyamide residues, and amorphous polyamide residues. The first polymeric resin may also contain 0 wt% or more, or 10 wt% or more.

Aliphatic polyamide residues may comprise, for example, polycaprolactam (PA 6) residues, polyundecanamide (PA 11) residues, poly-lauryllactam (PA 12) residues, polybutylene adipamide (PA 46) residues, polyhexamethylene adipamide (PA 66) residues, polyhexamethylene azelamide (PA 69) residues, polyhexamethylene sebacamide (PA 610) residues, polyhexamethylene dodecanediamide (PA 612) residues, polydecamethylene dodecanediamide (PA 1012) residues, polydecamethylene sebacamide (PA 1010) residues, polydodecamethylene dodecanediamide (PA 1212) residues, polyamide copolymer PA 11/NHUA residues, PA BACM6 residues, PA BACM10 residues, PA BACM12 residues, PA 6/66 residues, or PA 6/12 residues.

The semi-aromatic polyamide residues may be PA 6/6T residues, PA 66/6T residues, PA 6T/6I residues, PA 66/6T/6I residues, PA 11/6T residues, PA 12/6T residues, PA MXD6 residues, or PA MXD10 residues.

The semi-crystalline polyamide residues may be PA 6 residues, PA 11 residues, PA 12 residues, PA 10.10 residues, PA 10.12 residues, PA 6.10 residues, or PA 6.12 residues.

The amorphous polyamide residues are; polyamide comprising polyhexamethylene isophthalamide (PA 6I) residues, polytrimethylhexamethylene terephthalamide (PA TMHMDAT) residues, and PA BACM12 residues; Amide copolymers comprising PA 6/BMACPI residues, PA 6/BAMNT residues, PA 11/BMACMI residues, PA 11/BMACMT/BMACMI residues, PA 11/BACM.I/IPDA.I residues, PA 12/BMACM.I residues, PA 12/BMACMT/BACMI residues, PA 12/BMACMT/BACMI residues, PA 12/BACMI/IPDAI residues, PA 6T/6I/BACMI residues, or PA 6T/6I/BACMT/BACMI residues.

The first polymeric resin may comprise 20 wt% or more, 30 wt% or more, 40 wt% or more, 50 wt% or more, 60 wt% or more, or 70 wt% or more of the polyether-based repeating units based on the total weight of the first polymeric resin. The first polymeric resin may also comprise 100 wt% or less, or 90 wt% or less.

The polyether-based repeating unit may comprise a tetramethylene oxide residue, an ethylene oxide residue, and/or a propylene oxide residue.

The first polymeric resin may comprise 20 wt% or more, 30 wt% or more, 40 wt% or more, 50 wt% or more, 60 wt% or more, or 70 wt% or more of the sum of the tetramethylene oxide residues, ethylene oxide residues, and propylene oxide residues. The first polymeric resin may also comprise less than or equal to 100 wt%, or less than or equal to 90 wt%.

For example, the polyether repeating unit may comprise -CHz-CHz-CHz-CHz-O-, - CH₂- CH₂-O-, and/or -CH₂(-CH₂)-CH₂-O-.

The first polymeric resin may comprise 20 wt% or more, 30 wt% or more, 40wt% or more, 50 wt% or more, or 70 wt% or more of the sum of -CH₂-CH₂-CH₂-CH₂-O-, -CH₂- CH₂-O-, and -CH₂(-CH₂)-CH₂-O-. The first polymeric resin may also comprise less than or equal to 100 wt%, or less than or equal to 90 wt%.

The first polymer resin may be a polyether block amide resin. When the first polymer resin is a polyether block amide resin, the content of tetramethylene oxide residues, ethylene oxide residues, and/or propylene oxide residues contained in the resin may be less than 40 wt%, less than 30 wt%, or less than 20 wt% based on the total weight of the resin. In this case, the extent of haze variation over time can be more effectively controlled.

The first polymeric resin may be, for example, a polyether ester copolymer layer. The first polymeric resin may be a polyether ester copolymer resin.

The first polymer resin may be, for example, PEBAX^{®} 25R53, PEBAX^{®} 35R53, PEBAX^{®} 40R53, PEBAX^{®} 55R53, PEBAX^{®} 72R53, PEBAX^{®} Clear1200, Rilsan^{®} BESNO or equivalent from ARKEMA FRANCE.

### Second Polymer Resins

The second polymeric resin comprises hydroxyl groups within its branches.

The second polymeric resin may comprises any one selected from the group consisting of hydroxyl groups, acetyl groups, and combinations thereof within its branches.

Specifically, the second polymer resin may be a polyvinyl alcohol resin or a polyvinyl acetal resin. Polyvinylacetal resin may be obtained by synthesizing polyvinyl alcohol and aldehyde.

The second polymeric resin may have a polymerization degree of 3,500 or less.

The second polymer resin may be applied to the formation of a coating film or the like when the degree of polymerization is low, and to the manufacture of a film by extrusion or the like when the degree of polymerization is above a certain level.

Embodiments apply a blend of first and second polymeric resins, and both grades are applicable.

For example, the second polymeric resin may be a polyvinyl alcohol resin having a polymerization degree of 200 to 3,500. Alternatively, the second polymeric resin may be a polyvinyl acetal resin obtained by aldehyde acetalization of a polyvinyl alcohol resin having a polymerization degree of 200 to 3,500.

For example, the second polymeric resin may be a polyvinyl alcohol resin having a polymerization degree of 1,600 to 3,000. Alternatively, the second polymeric resin may be a polyvinyl acetal resin obtained by aldehyde acetalization of a polyvinyl alcohol resin having a polymerization degree of 1,600 to 3,000.

Exemplarily, the second polymeric resin may be a polyvinyl alcohol resin having a polymerization degree of 1,700 to 2,500. Alternatively, the second polymeric resin may be a polyvinylacetal resin obtained by aldehyde acetalization of a polyvinyl alcohol resin having a polymerization degree of 1,700 to 2,500.

When applied to these second polymer resins, the mechanical properties of the film can be sufficiently improved.

The aldehyde may be any one selected from the group consisting of n-butyl aldehyde, isobutyl aldehyde, n-barrel aldehyde, 2-ethyl butyl aldehyde, n-hexyl aldehyde, and resins blends thereof. When n-butyl aldehyde is applied as the aldehyde, the manufactured polyvinylbutyral resin may have excellent optical properties.

The second polymeric resin comprises a hydroxy group.

The hydroxyl group content of the second polymeric resin may be greater than or equal to 2 wt%, greater than or equal to 5 wt%, greater than or equal to 8 wt%, greater than or equal to 10 wt%, greater than or equal to 15 wt%, greater than or equal to 16 wt%, or greater than or equal to 19 wt%. Further, the hydroxyl group content of the second polymeric resin may be 60 wt% or less, 50 wt% or less, 40 wt% or less, or 30 wt% or less.

The second polymeric resin may have an acetyl group content of 0.01 wt% or more, 1.5 wt% or more, 3 wt% or more, 5 wt% or more, or 10 wt% or more. Alternatively, the second polymeric resin may have an acetyl group content of 20 wt% or less, 15 wt% or less, or 12 wt% or less.

When applied as a second polymer resin having these characteristics, it may increase miscibility with the plasticizer described later and effectively suppress the deterioration of the optical performance of the film due to haze change. It is thought that the hydroxyl groups arranged within its branches help to inhibit the migration of unreacted polyether monomers (or oligomers), thereby inhibiting the induction of haze changes.

The film may further comprise a plasticizer. The plasticizer may comprise no more than 0.5 parts per weight based on 1 parts per weight of the second polymeric resin.

The plasticizer may comprise 0.01 or more parts per weight, 0.05 or more parts per weight, 0.08 or more parts per weight, 0.1 or more parts per weight, 0.12 or more parts per weight, or 0.15 or more parts per weight, based on 1 parts per weight of the second polymer resin. Further, the plasticizer may comprise 0.5 parts per weight or less, 0.4 parts per weight or less, 0.35 parts per weight or less, or 0.3 parts per weight or less, based on 1 part per weight of the second polymer resin.

Specifically, the plasticizer may be one selected from the group consisting of triethylene glycol bis 2-ethylhexanoate (3G8), tetraethylene glycol diheptanoate (4G7), triethylene glycol bis 2-ethylbutyrate (3GH), triethylene glycol bis 2-ethylheptanoate (3G7), dibutoxyethoxyethyl adipate (DBEA), butyl carbitol adipate (DBEEA), dibutyl sebacate (DBS), bis 2-hexyl adipate (DHA), and combinations thereof, and more particularly may comprise any one selected from the group consisting of triethylene glycol di- 2-ethyl butylate, triethylene glycol di- 2-ethylhexanoate, triethylene glycol di-nheptanoate, and combinations thereof. More particularly may comprise triethylene glycol bis 2-ethylhexanoate (3G8). These plasticizers have good miscibility with the second polymeric resin and may simultaneously improve workability and optical performance.

### Film

To achieve the above objectives, the film according to one embodiment of the present embodiments comprises a first polymeric resin and a second polymeric resin that are heterogeneous resins. The film comprises a mixture of the first polymeric resin and the second polymeric resin, which are heterogeneous resins. Specific descriptions of the first polymer resin and the second polymer resin are redundant to those made above, and therefore are omitted.

The film may comprise no more than 2.5 parts per weight of the second polymeric resin based on 1 parts per weight of the first polymeric resin. Specifically, the film may comprise 2.5 parts per weight or less, 2.3 parts per weight or less, 2 parts per weight or less, 1.8 parts per weight or less, 1.6 parts per weight or less, 1.5 parts per weight or less, 1 parts per weight or less, 0.67 parts per weight or less, or 0.5 parts per weight or pess of the second polymeric resin based on 1 parts per weight of the first polymeric resin. The film may comprise 0.001 parts per weight or more, 0.01 parts per weight or more, 0.1 parts per weight or more, 0.2 parts per weight or more, or 0.3 parts per weight or more of the second polymeric resin based on 1 parts per weight of the first polymeric resin.

Manufacturing the film at such a ratio can help minimize the migration of unreacted polyether, effectively suppressing the degradation of the optical performance of the film due to haze changes.

The film may have a thickness of 1,000 µm or less. For example, the film may have a thickness of 500 µm or less, 250 µm or less, or 150 µm or less. The thickness of the film may be 1 µm or more, 10 µm or more, 20 µm or more, 30 µm or more, 40 µm or more, or 50 µm or more. The thickness of the film may also be 100 µm or more. When the film is manufactured with such thickness, it is possible to provide a film that is thin and light, has characteristics such as excellent impact resistance, and has low haze.

The film may have a haze value of 3% or less at room temperature. For example, the film may have a haze value of 2.5% or less, or 2% or less, at room temperature. The film may have a haze value of 0% or more, or 0.1% or more, at room temperature. When the film is formulated to have such a haze value, it can achieve a level of transparency that is applicable as an optical film.

The film may exhibit a haze value of 3% or less after being exposed to 60°C for 7 days. Specifically, the haze value may be 2.5% or less, or even 2% or less, after this exposure. Additionally, the film may maintain a haze value of 0% or more, or 0.1% or more, after being subjected to 60°C for 7 days.

The film may have a haze value difference of 1% or less before and after being exposed to 60°C for 7 days. For example, this difference in haze value may be 0.5% or less, 0.3% or less, 0.1 % or less, 0.05% or less, 0.01% or less, or even 0.001% or less after the 7-day exposure at 60°C. The film may have a difference in haze value between before and after being exposed to 60°C for 7 days of 0% or more, or 0.0001% or more. In this case, the film may minimize the degradation of optical performance due to a small change in the haze value even when exposed for a long time to a film application work environment that is relatively hotter than room temperature.

The film of the embodiment may be an extruded film. Extruded films have the advantage that they are relatively easy to mass produce and allow the formation of laminated films comprising additional layers. In the case of manufacturing with an extruded film, it is relatively easy to control the thickness of the film, and it is advantageous to manufacture a relatively thick film with a well-controlled overall thickness compared to a casting method. Exemplarily, the thickness of the extruded film may be 80 µm or more, 90 µm or more, or 100 µm or more.

The film of an embodiment may be a film further comprising a plasticizer. The plasticizer may adjust the modulus of the film. For example, the film comprising the plasticizer may lower the modulus, which can improve the workability of the surface protective film.

The film may be a surface protective film.

The surface protection film may be applied to an automobile, aircraft, electronics, furniture, or the like (hereinafter referred to as an article). The article may comprise a painted surface on which at least a portion of a paint or the like is applied. The surface protective film may be applied to the painted surface to protect the paint from peeling off from the article.

The present disclosure will now be described in more detail with reference to specific embodiments. The following embodiments are illustrative only to aid in understanding the invention and are not intended to limit the scope of the invention.

### 1. Preparation of the Resin

First polymer resin composition: PEBAX^{®} 40R53 (containing about 46 wt% PA11 residues as amide residues and about 54 wt% polytetramethylene glycol residues) was applied as the first polymer resin composition. PEBAX^{®} 40R53 is a commercially available polyether block amide resin, abbreviated as 40R53. The resin was obtained from ARKEMA FRANCE.

Second polymer resin composition: Polyvinyl alcohol having a polymerization degree of 1700 and a degree of saponification of 99 and n-butyl aldehyde were added to obtain a polyvinyl butyral resin having 20.3 wt% hydroxyl groups, 78.9 wt% butyral groups, and 0.8 wt% acetyl groups by conventional synthesis. The polyvinyl butyral resin was then mixed with 83 wt% of the above polyvinyl butyral resin and 17 wt% of the plasticizer triethylene glycol bis 2-ethylhexanoate (3G8) to manufacture a second polymer resin composition.

### 2. Manufacture of Sample Film

The first polymeric resin composition and the second polymeric resin composition were mixed and melt-extruded through an extruder possessed by SK microworks Co., Ltd. to produce a film. Specifically, each of the materials included in the above-mentioned compositions were injected into the twin-screw extruder in the form of polymer resin chips, powder, and liquid plasticizer, and a processing temperature of 180 to 240°C and a filter mesh in the extruder ranging from 80 to 120 mesh were applied. The films were manufactured with a thickness of about 130 µm, 150 µm, 158 µm, 118 µm, and 145 µm, respectively. The films of comparative example were extruded to a thickness of about 150 µm. The films were stored with a PET protective film on both sides.

### 3. Evaluate the Properties of the Film

When manufacturing the sample films, the contents of the first polymer resin composition and the second polymer resin composition were input in different weight ratios for each sample.

The thickness of each layer was measured using a Filmetrics F-20 instrument according to the manufacturer's manual. Measurements were taken from 3 to 5 points within the sample and the average value was used as the thickness.

A haze meter (NDH-5000W, Nippon Denshoku) was used to measure the haze of the film samples according to the ISO 14782 standard.

The difference between the haze value (Delta Haze) before and after leaving it in a 60°C oven for about 7 days after removing the double-sided protective film and was calculated by applying the above haze measurement method and calculating the value measured respectively using the formula below.

Delta Haze = | (Haze measured after removing the double-sided protective film and leaving the sample film in a 60°C oven for about 7 days) - (Haze on the sample film immediately after removing the double-sided protective film) |

The results of the above evaluation are shown in Table 1 below.

**[Table 1]**

| | Example 1 | Example 2 | Example 3 | Example 4 |
|---|---|---|---|---|
| First Polymer Resins (parts per weight) | 50 | 60 | 70 | 80 |
| Second Polymer Resins (parts per weight) | 41.5 | 33.2 | 24.9 | 16.6 |
| Plasticizer (parts per weight) | 8.5 | 6.8 | 5.1 | 3.4 |
| Thickness (µm) | 130 | 150 | 158 | 118 |
| Haze Value before being left (%)* | 1.96 | 2.39 | 2.12 | 1.73 |
| Haze Value after being left (at 60°C for 7 days) (%)** | 1.88 | 2.07 | 2.12 | 1.77 |
| Delta Haze (%) | 0.08 | 0.32 | 0 | 0.04 |

| | Example 5 | Comparative Example 1 | - | - |
|---|---|---|---|---|
| First Polymer Resins (parts per weight) | 90 | 100 | - | - |
| Second Polymer Resins (parts per weight) | 7.2 | 0 | - | - |
| Plasticizer (parts per weight) | 1.7 | 0 | - | - |
| Thickness (µm) | 130 | 150 | - | - |
| Haze Value before (%)* | 1.85 | 1.75 | | - |
| Haze Value after being left at 60°C for 7 days (%)** | 1.92 | 4.20 | - | - |
| Delta Haze (%) | 0.07 | 2.45 | - | - |

| | | | | |
|---|---|---|---|---|
| * Haze on the sample film immediately after removing the protective film. ** Haze measured after removing the protective film and placing the sample film in a 60°C oven for approximately 7 days. | | | | |

FIG. 1 shows a comparative observation of a film of Comparative Example 1 (with strong haze, left) and a film of Example 3 (with low haze, right) in natural light. Referring to Table 1 and FIG. 1 above, it can be seen that the films of the Comparative Example exhibited a change in haze value, while the films of the Example 3 exhibited substantially no change in haze value. Compared to the film made with only the first polymer resin, the haze change was minimal when left at room temperature, which is thought to be one of the features that can increase the utilization.

The films of the embodiments may have better optical properties due to suppression of haze changes even when exposed to high temperature or ultraviolet light environments for a long period of time and may be utilized as surface protection films. However, the effects of the embodiments are not limited to those mentioned above, and other effects not mentioned will be apparent to those skilled in the art from the following description.

Although preferable embodiments of the present disclosure have been described above in detail, the scope of the present disclosure is not limited thereto, and various modifications and improvements made by those skilled in the art using the basic concepts of the present disclosure also belong to the scope of the present disclosure.

## Claims

1. A film comprising a first polymeric resin and a second polymeric resin which are heterogeneous resins,
wherein the first polymeric resin comprises polyamide-based repeating units and polyether-based repeating units, and the second polymeric resin comprises any one selected from the group consisting of hydroxyl groups, acetyl groups, and combinations thereof within its branches, and
wherein the film has a haze value of 3% or less, after being exposed to 60°C for 7 days.

2. The film of Claim 1, wherein the film has a haze value difference of 1% or less before and after being exposed to 60°C for 7 days.

3. The film of Claim 1 or Claim 2, wherein the polyether-based repeating unit comprises any one of tetramethylene oxide residues, ethylene oxide residues, and propylene oxide residues.

4. The film of any one from Claim 1 to Claim 3, wherein the film comprises 20 wt% or more of the polyether-based repeating units, based on the total weight of the first polymeric resin.

5. The film of any one from Claim 1 to Claim 4, wherein the film comprises 2.5 parts per weight or more of the second polymeric resin based on 1 parts per weight of the first polymeric resin.

6. The film of any one from Claim 1 to Claim 5, further comprising plasticizers,
wherein the plasticizers are one selected from triethylene glycol bis 2-ethylhexanoate (3G8), tetraethylene glycol diheptanoate (4G7), triethylene glycol bis 2- ethylbutyrate (3GH), triethylene glycol bis 2-heptanoate (3G7), dibutoxyethoxyethyl adipate (DBEA), butyl carbitol adipate (DBEEA), dibutyl sebacate (DBS), bis 2-hexyl adipate (DHA), triethylene glycol di- 2-ethyl butylate, triethylene glycol di- 2-ethylhexanoate, and triethylene glycol di-n-heptanoate.

7. The film of Claim 6, wherein the film comprises 0.5 parts per weight or less of the plasticizer, based on 1 parts per weight of the second polymeric resin.

8. The film of any one from Claim 1 to Claim 7, wherein the film comprises at least 2 wt% of hydroxyl groups of the second polymeric resin, based on the total weight of the second polymeric resin.

9. The film of any one from Claim 1 to Claim 8, wherein the film has a haze value of 3% or less at room temperature.

10. The film of any one from Claim 1 to Claim 9, wherein the film is a surface protective film.
